(19) **Europäisches Patentamt / European Patent Office / Office européen des brevets**

(11) **EP 4 600 396 A1**

(12) **EUROPEAN PATENT APPLICATION**
published in accordance with Art. 153(4) EPC

(43) Date of publication:
**13.08.2025   Bulletin 2025/33**

(21) Application number: **23894535.6**

(22) Date of filing: **17.11.2023**

(51) International Patent Classification (IPC):
*C22C 38/00* (2006.01)   *B21B 1/26* (2006.01)
*C21D 8/02* (2006.01)   *C21D 9/46* (2006.01)
*C22C 38/12* (2006.01)   *C22C 38/60* (2006.01)

(52) Cooperative Patent Classification (CPC):
**B21B 1/26; C21D 8/02; C21D 9/46; C22C 38/00;
C22C 38/12; C22C 38/60;** Y02P 10/20

(86) International application number:
**PCT/JP2023/041537**

(87) International publication number:
**WO 2024/111527 (30.05.2024 Gazette 2024/22)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.11.2022   JP 2022186158**

(71) Applicant: **JFE Steel Corporation
Tokyo 100-0011 (JP)**

(72) Inventors:
• **HASEGAWA Hiroshi
Tokyo 100-0011 (JP)**
• **MATSUDA Hiroshi
Tokyo 100-0011 (JP)**
• **TOBITA Shunsuke
Tokyo 100-0011 (JP)**

(74) Representative: **Hoffmann Eitle
Patent- und Rechtsanwälte PartmbB
Arabellastraße 30
81925 München (DE)**

(54) **HIGH-STRENGTH HOT-ROLLED STEEL SHEET AND METHOD FOR PRODUCING SAME**

(57)   Provided are a high-strength hot rolled steel sheet having good toughness and exhibiting high strength, good toughness, and good bendability after post-heating and a method for producing the high-strength hot rolled steel sheet.

The high-strength hot rolled steel sheet has a chemical composition containing, in % by mass, C: 0.04 to 0.18%, Si: 0.1 to 3.0%, Mn: 0.5 to 3.5%, P: more than 0% and 0.050% or less, S: more than 0% and 0.010% or less, Al: more than 0% and 1.5% or less, N: more than 0% and 0.010% or less, O: more than 0% and 0.003% or less, and Nb: 0.020 to 0.100%, with the balance being Fe and incidental impurities. The steel sheet has a steel microstructure in which bainite is a main phase and in which the volume fraction of retained austenite is less than 3%. (The amount of solute Nb / the total amount of Nb) is 0.300 or more and less than 0.800, and the amount of Nb present as precipitates having a diameter of 100 nm or more is 0.010 to 0.030% by mass.

Processed by Luminess, 75001 PARIS (FR)

## Description

Technical Field

The present invention relates to a high-strength hot rolled steel sheet and a method for producing the same and more particularly to a high-strength hot rolled steel sheet suitable for a material of automotive parts and a method for producing the same.

Background Art

From the viewpoint of improving crash safety of automobiles and their fuel economy, there is a need to increase the strength of hot rolled steel sheets used for automotive parts. However, with hot rolled steel sheets with increased strength, the occurrence of cracking due to insufficient workability is significant during pressing, and it is therefore necessary to improve the pressing method and the workability of the steel sheets. It has been attempted to improve the workability by heating a steel sheet (base sheet) used for the pressing method. In the present description, heat treatment performed when a steel sheet (base sheet) is processed into a part is referred to also as post-heating. As for the steel sheets, development in consideration of the characteristics of parts subjected to post-heating and a working process (a post-heating working process) is being carried out.

Patent Literature 1 discloses a technique for a method in which working temperature (heating temperature of post-heating) is set to 400 to 1000°C to improve stretch flangeability. Patent Literature 2 discloses a technique for a high-strength hot rolled steel sheet having a TS of 730 MPa or more. The hot rolled steel sheet disclosed in Patent Literature 2 has a microstructure in which bainite is a main phase and the amount of solute Ti with respect to the total amount of Ti is 80% or more. In this manner, heat treatment hardenability is obtained in which the amount of increase in YS (yield strength) and the amount of increase in TS after heat treatment including heating the steel sheet to a temperature range of 500°C to the Ac1 transformation point and then holding the steel sheet for 60 minutes are 100 MPa or more. Patent Literature 3 discloses a technique for improving stretch flangeability by applying heat treatment in post-heating only to a flange portion of a metal sheet when the metal sheet is subjected to press forming including stretch flange forming.

Citation List

Patent Literature

PTL 1: Japanese Unexamined Patent Application Publication No. 2002-113527
PTL 2: Japanese Unexamined Patent Application Publication No. 2015-57514
PTL 3: International Publication No. WO2019/131289

Summary of Invention

Technical Problem

However, in Patent Literature 1, no consideration is given to the performance of parts such as strength, toughness, etc. after the post-heating, and there is room for improvement. In the steel sheet disclosed in Patent Literature 2, the increase in strength after heat treatment is significant, and the precipitation of fine carbides after heat treatment is significant. Therefore, one problem with this steel sheet is toughness after heat treatment, so that there is room for improvement. In Patent Literature 3, no consideration is given to toughness after post-heating and workability after post-heating such as bendability in a heat-affected zone near end faces, so that there is room for improvement.

The present invention has been made in view of the foregoing circumstances, and it is an object to provide a high-strength hot rolled steel sheet having good toughness and exhibiting high strength, good toughness, and good bendability after post-heating and to provide a method for producing the high-strength hot rolled steel sheet. Solution to Problem

The inventors have focused attention on the behavior of precipitation of Nb after post-heating of hot rolled steel sheets and have achieved the improvement in the strength and toughness of the steel sheets after post-heating by controlling the initial amounts of coarse Nb-containing precipitates and solute Nb before post-heating. The inventors have thus found that good toughness can be achieved even after post-heating by adjusting the chemical components, forming bainite as a main phase, adjusting the volume fraction of retained $\gamma$ to less than 3%, adjusting the ratio of the amount of solute Nb to the amount of Nb contained, i.e., (the amount of solute Nb / the total amount of Nb), to 0.300 or more and less than 0.800, and adjusting the amount of Nb present as precipitates having a diameter of 100 nm or more to 0.010 to 0.030% by mass. The inventors have also found that good bendability can be achieved even after post-heating by adding Si. Thus, the invention has been completed.

In the present invention, the high strength means a tensile strength (TS) of 780 MPa or more and less than 1320 MPa.

In the present invention, the phrase "the toughness is good" means that, in a Charpy impact test using a test specimen cut from a hot rolled steel sheet (a base sheet or a hot rolled steel sheet subjected to post heating), the percent ductile fracture at -40°C is 50% or more. The thickness of the test specimen is 0.6 to 3.0 mm. When the thickness of the hot rolled steel sheet exceeds 3.0 mm, the front and back surfaces of a test specimen cut from the hot rolled steel sheet are ground, and the resulting test specimen is used for the Charpy impact test.

In the present invention, the phrase "the strength after post-heating is high" means that the reduction in the strength of a hot rolled steel sheet after post-heating with respect to the strength of the hot rolled steel sheet before post-heating (the base sheet) is 40 or less in terms of Vickers hardness.

In the present invention, the phrase "the bendability is good" means that R/t obtained by dividing a minimum bending radius (R (mm)) at which a crack with a length of 1 mm or more is not formed by the thickness (t (mm)) of the sheet is 0.5 or less when the TS is in the range of 780 MPa or more and less than 900 MPa, is 2.0 or less when the TS is in the range of 900 MPa or more and less than 1150 MPa, and is 3.5 or less when the TS is in the range of 1150 MPa or more and less than 1320 MPa.

In the present invention, the post-heating means heat treatment in which a hot rolled steel sheet (base sheet) is heated to 400°C or higher.

The present invention includes the following aspects.

[1] A high-strength hot rolled steel sheet having a chemical composition containing, in % by mass,

C: 0.04 to 0.18%,
Si: 0.1 to 3.0%,
Mn: 0.5 to 3.5%,
P: more than 0% and 0.050% or less,
S: more than 0% and 0.010% or less,
Al: more than 0% and 1.5% or less,
N: more than 0% and 0.010% or less,
O: more than 0% and 0.003% or less, and
Nb: 0.020 to 0.100%,
with the balance being Fe and incidental impurities,
wherein the high-strength hot rolled steel sheet has a steel microstructure in which bainite is a main phase and in which a volume fraction of retained austenite is less than 3%,
wherein a ratio of an amount of solute Nb to an amount of Nb contained, which is given by (the amount of solute Nb / a total amount of Nb), is 0.300 or more and less than 0.800, and
wherein an amount of Nb present as precipitates having a diameter of 100 nm or more is 0.010 to 0.030% by mass.

[2] The high-strength hot rolled steel sheet according to [1], wherein the chemical composition further contains, in % by mass, at least one or two elements selected from

Cr: 0.005 to 2.0%,
Cu: 0.005 to 0.5%,
Ni: 0.005 to 2.0%,
Mo: 0.005 to 1.0%,
V: 0.005 to 0.5%,
Ti: 0.005 to 0.15%,
B: 0.0002 to 0.0050%,
Ca: 0.0001 to 0.0050%,
REM: 0.0001 to 0.0050%,
Sb: 0.0010 to 0.10%, and
Sn: 0.0010 to 0.50%.

[3] A method for producing the high-strength hot rolled steel sheet according to [1] or [2], the method including:

heating a slab having the chemical composition in a temperature range of 1150 to 1300°C; holding the slab in the temperature range for 0.2 to 3.5 hours;

then hot-rolling the slab to obtain a steel sheet,
the hot-rolling including rough rolling in a temperature range of 1080°C or higher at a total rolling reduction of 80 to 90%, cooling of the resulting steel sheet to finish rolling start temperature at an average cooling rate of 1 to 20°C/s, and finish rolling, the finish rolling being performed under the condition that a rolling reduction per pass at lower than or equal to T (°C) determined from a formula below is 25% or less; after completion of the finish rolling, allowing the resulting steel sheet to naturally cool for 2.0 s or longer;
then cooling the resulting steel sheet in a temperature range down to 550°C at an average cooling rate of 50°C/s or more; and then coiling the resulting steel sheet at a coiling temperature higher than or equal to Ms temperature (°C) and 550°C or lower:

$$T \ (°C) \ = \ 800 \ + \ 2500[Nb] \ + \ 1000[Ti],$$

where [Nb] and [Ti] are a content (% by mass) of Nb and a content (% by mass) of Ti, respectively, and are each 0 when a corresponding element is not contained.

Advantageous Effects of Invention

The present invention can provide a high-strength hot rolled steel sheet having good toughness and exhibiting high strength, good toughness, and good bendability after post-heating and can provide a method for producing the high-strength hot rolled steel sheet.

The high-strength hot rolled steel sheet obtained in the invention is suitable for a material of automotive parts and exhibits high strength, good toughness, and good bendability even after post-heating.

With the high-strength hot rolled steel sheet of the invention, high-strength products such as high-strength automotive parts can be obtained which exhibit high strength and good toughness even after post-heating for improving workability and improving fatigue properties.

Description of Embodiments

The details of embodiments of the high-strength hot rolled steel sheet of the invention and a method for producing the same will be described. However, the invention is not limited to the following embodiments.

<High-strength hot rolled steel sheet>

The high-strength hot rolled steel sheet of the invention may be an as-hot-rolled steel sheet with mill scale or a so-called pickled hot rolled steel sheet subjected to pickling after the hot rolling. Preferably, the high-strength hot rolled steel sheet to be obtained in the invention has a thickness of 0.6 mm or more. Preferably, the high-strength hot rolled steel sheet of the invention has a thickness of 10.0 mm or less. When the high-strength hot rolled steel sheet of the invention is used as a material of automotive parts, the thickness is more preferably 1.0 mm or more. When the high-strength hot rolled steel sheet of the invention is used as a material of automotive parts, the thickness is more preferably 6.0 mm or less. The width of the high-strength hot rolled steel sheet of the invention is preferably 500 mm or more and more preferably 700 mm or more. The width of the high-strength hot rolled steel sheet of the invention is preferably 1800 mm or less and more preferably 1400 mm or less.

The high-strength hot rolled steel sheet of the invention has a specific chemical composition and a specific steel microstructure. The chemical composition and the steel microstructure will be described in this order.

First, the chemical composition of the high-strength hot rolled steel sheet of the invention will be described. "%" representing a content in the chemical composition means "% by mass."

The high-strength hot rolled steel sheet of the invention has a chemical composition containing, in % by mass, C: 0.04 to 0.18%, Si :0.1 to 3.0%, Mn: 0.5 to 3.5%, P: 0.050% or less (excluding 0%), S: 0.010% or less (excluding 0%), Al: 1.5% or less (excluding 0%), N: 0.010% or less (excluding 0%), O: 0.003% or less (excluding 0%), and Nb: 0.020 to 0.100%, with the balance being Fe and incidental impurities.

C: 0.04 to 0.18%

C is an element that increases the TS through the formation and strengthening of bainite, is bonded with Nb, N, etc. to form precipitates, and is thereby effective in preventing a reduction in the strength after post-heating. If the content of C is less than 0.04%, these effects are not obtained, and the TS of the steel sheet (base sheet) is not 780 MPa or more, or the steel sheet does not exhibit high strength after post-heating. If the content of C exceeds 0.18%, the reduction in toughness is significant, and the good toughness in the invention is not obtained. Therefore, the content of C is 0.04 to 0.18%. The content of C is preferably 0.05% or more. The content of C is preferably 0.16% or less and more preferably 0.11% or less.

Si: 0.1 to 3.0%

Si is an element effective in solid solution strengthening of the steel and in preventing a reduction in the strength and a reduction in the bendability after post-heating. To obtain these effects, the content of Si must be 0.1% or more. If the content of Si exceeds 3.0%, the amount of polygonal ferrite formed is excessively large, so that the steel microstructure in the invention is not obtained. Therefore, the content of Si is 0.1 to 3.0%. The content of Si is preferably 0.2% or more. The content of Si is preferably 2.0% or less and more preferably 1.5% or less.

Mn: 0.5 to 3.5%

Mn is an element effective in the formation of bainite to increase the TS. If the content of Mn is less than 0.5%, this effect is not obtained sufficiently, and polygonal ferrite etc. are formed, so that the microstructure in the invention is not obtained. If the content of Mn exceeds 3.5%, the toughness decreases significantly, so that the good toughness in the invention is not obtained. Therefore, the content of Mn is 0.5 to 3.5%. The content of Mn is preferably 1.0% or more. The content of Mn is preferably 2.7% or less.

P: more than 0% and 0.050% or less

P causes deterioration in toughness, and it is therefore preferable to reduce the amount of P as much as possible. In the present invention, the allowable content of P is 0.050%. Therefore, the content of P is 0.050% or less. The content of P is preferably 0.030% or less. No particular limitation is imposed on the lower limit, and the content of P may be more than 0%. However, if the content of P is less than 0.001%, the production efficiency is low. Therefore, the content of P is preferably 0.001% or more.

S: more than 0% and 0.010% or less

S causes deterioration in toughness, and it is therefore preferable to reduce the amount of S as much as possible. In the present invention, the allowable content of S is 0.010%. Therefore, the content of S is 0.010% or less. The content of S is preferably 0.0050% or less and more preferably 0.0020% or less. No particular limitation is imposed on the lower limit, and the content of S may be more than 0%. However, if the content of S is less than 0.0002%, the production efficiency is low. Therefore, the content of S is preferably 0.0002% or more.

Al: more than 0% and 1.5% or less

Al serves as a deoxidizing agent, and it is preferable to add Al in a deoxidization step. The content of Al may be more than 0%. However, from the viewpoint of using Al as a deoxidizing agent, the content of Al is preferably 0.01% or more. If a large amount of Al is contained, a large amount of polygonal ferrite is formed, and the steel microstructure in the invention is not obtained. In the present invention, the allowable content of Al is 1.5%. Therefore, the content of Al is 1.5% or less. The content of Al is preferably 0.50% or less and more preferably 0.25% or less.

N: more than 0% and 0.010% or less

N forms NbN and inhibits the precipitation of NbC, and it is therefore preferable to reduce the amount of N as much as possible. In the present invention, the allowable content of N is 0.010%. Therefore, the content of N is 0.010% or less. The content of N is preferably 0.007% or less. No particular limitation is imposed on the lower limit, and the content of N may be more than 0%. However, if the content of N is less than 0.0005%, the production efficiency is low. Therefore, the content of N is preferably 0.0005% or more.

O: more than 0% and 0.003% or less

O causes deterioration in toughness, and it is therefore preferable to reduce the amount of O as much as possible. In the present invention, the allowable content of O is 0.003%. Therefore, the content of O is 0.003% or less. The content of O is preferably 0.002% or less. No particular limitation is imposed on the lower limit, and the content of O may be more than 0%. However, if the content of O is less than 0.0002%, the production efficiency is low. Therefore, the content of O is preferably 0.0002% or more.

Nb: 0.020 to 0.100%

Nb is the most important element in the invention and is an element necessary to appropriately form precipitates such as NbC after post-heating to thereby obtain high strength and good toughness after post-heating. If the content of Nb is less than 0.020%, the above effect is not obtained sufficiently, and the strength after post-heating is not high. If the content of Nb exceeds 0.100%, the amount of precipitates after post-heating increases excessively, and the toughness after post-heating is not good. Therefore, the content of Nb is 0.020 to 0.100%. The content of Nb is preferably 0.030% or more. The content of Nb is preferably 0.080% or less.

The above components are the basic components of the high-strength hot rolled steel sheet of the invention. The high-strength hot rolled steel sheet of the invention may have a chemical composition containing the above components with the balance being Fe and incidental impurities.

The high-strength hot rolled steel sheet of the invention may further contain, in addition to the components described above, at least one or two or more elements selected from Cr: 0.005 to 2.0%, Cu: 0.005 to 0.5%, Ni: 0.005 to 2.0%, Mo: 0.005 to 1.0%, V: 0.005 to 0.5%, Ti: 0.005 to 0.15%, B: 0.0002 to 0.0050%, Ca: 0.0001 to 0.0050%, REM: 0.0001 to 0.0050%, Sb: 0.0010 to 0.10%, and Sn: 0.0010 to 0.50%.

Cr: 0.005 to 2.0%

Cr is an element effective in stabilizing austenite and the formation of bainite. When Cr is contained, the content of Cr is preferably 0.005% or more in order to obtain the above effect. If the content of Cr exceeds 2.0%, a significant reduction in corrosion resistance may occur. Therefore, when Cr is contained, the content of Cr is preferably 2.0% or less. The content of Cr is more preferably 0.1% or more. The content of Cr is more preferably 0.8% or less.

Cu: 0.005 to 0.5%

Cu is an element effective in stabilizing austenite and the formation of bainite. When Cu is contained, the content of Cu is preferably 0.005% or more in order to obtain the above effect. If the content of Cu exceeds 0.5%, the formation of Cu precipitates is significant, and this may cause deterioration in toughness. Therefore, when Cu is contained, the content of Cu is preferably 0.5% or less. The content of Cr is more preferably 0.05% or more. The content of Cu is more preferably 0.3% or less.

Ni: 0.005 to 2.0%

Ni is an element effective in stabilizing austenite and the formation of bainite. When Ni is contained, the content of Ni is preferably 0.005% or more in order to obtain the above effect. If the content of Ni exceeds 2.0%, a large amount of retained $\gamma$ is formed, and this may cause deterioration in toughness. Therefore, when Ni is contained, the content of Ni is preferably 2.0% or less. The content of Ni is more preferably 0.05% or more. The content of Ni is more preferably 0.8% or less and still more preferably 0.5% or less.

Mo: 0.005 to 1.0%

Mo is an element effective in increasing the hardenability of the steel sheet and in the formation of bainite. When Mo is contained, the content of Mo is preferably 0.005% or more in order to obtain these effects. If the content of Mo exceeds 1.0%, the formation of Mo-based precipitates is significant, and this may cause deterioration in toughness. Therefore, when Mo is contained, the content of Mo is preferably 1.0% or less. The content of Mo is more preferably 0.05% or more. The content of Mo is more preferably 0.50% or less.

V: 0.005 to 0.5%

V is an element effective in increasing the hardenability of the steel sheet and in the formation of bainite. When V is contained, the content of V is preferably 0.005% or more in order to obtain these effects. If the content of V exceeds 0.5%, a significantly large number of V-based precipitates are formed, and this may cause deterioration in toughness. Therefore, when V is contained, the content of V is preferably 0.5% or less. The content of V is more preferably 0.01% or more. The content of V is more preferably 0.2% or less and still more preferably 0.1% or less.

Ti: 0.005 to 0.15%

Ti forms compounds together with C and N and is an element effective in increasing the strength through precipitation strengthening. When Ti is contained, the content Ti is preferably 0.005% or more in order to obtain the above effects. If the content of Ti exceeds 0.15%, the toughness may deteriorate. Therefore, when Ti is contained, the content of Ti is preferably 0.15% or less. The content of Ti is more preferably 0.01% or more. The content of Ti is more preferably 0.1% or less.

B: 0.0002 to 0.0050%

B is an element effective in increasing the hardenability of the steel sheet and in the formation of bainite. When B is contained, the content of B is preferably 0.0002% or more in order to obtain these effects. If the content of B exceeds 0.0050%, the amount of B-based compounds increases, and this may cause deterioration in toughness. Therefore, when B is contained, the content of B is preferably 0.0050% or less. The content of B is more preferably 0.0005% or more. The content of B is more preferably 0.0040% or less.

Ca: 0.0001 to 0.0050% and REM: 0.0001 to 0.0050%

Ca and REM (rare earth metal) are elements effective in improving the workability through shape control of inclusions. When Ca and REM are contained, their contents are each preferably 0.0001% or more in order to obtain the above effect. If the contents of Ca and REM each exceed 0.0050%, the influence of the increase in the amount of inclusions is significant, and this may cause deterioration in toughness. Therefore, when Ca and REM are contained, the contents of Ca and REM are each preferably 0.0050% or less. The content of Ca is more preferably 0.0005% or more. The content of Ca is more preferably 0.0030% or less. The content of REM is more preferably 0.0005% or more. The content of REM is more preferably 0.0030% or less. The REM is a generic term for Sc, Y, and 15 elements from lanthanum (La) with an atomic number of 57 to lutetium (Lu) with an atomic number of 71. The content of REM mentioned here is the total content of these elements.

Sb: 0.0010 to 0.10% and Sn: 0.0010 to 0.50%

Sb and Sn are each an element effective in suppressing surface reactions such as oxidation, denitrification, and deboronation to improve the surface properties of the steel sheet and in improving the toughness. When Sb and Sn are contained, the content of Sb and Sn are each preferably 0.0010% or more in order to obtain the above effects. If the content of Sb exceeds 0.10% or if the content of Sn exceeds 0.50%, the steel sheet is embrittled, and the toughness may deteriorate significantly. Therefore, when Sb is contained, the content of Sb is preferably 0.10% or less. When Sn is contained, the content of Sn is preferably 0.50% or less. The content of Sb is more preferably 0.0050% or more. The content of Sb is more preferably 0.030% or less. The content of Sn is more preferably 0.0050% or more. The content of Sn is more preferably 0.050% or less.

Even when the contents of Cr, Cu, Ni, Mo, V, Ti, B, Ca, REM, Sb, and Sn are lower than the respective lower limits, the effects of the invention are not impaired. Therefore, when the contents of these components are lower than the above lower limits, these elements are regarded as the content of incidental impurities.

In the present invention, the steel sheet may contain, in addition to the chemical composition described above, in % by mass, one or two or more of Mg, As, W, Ta, Pb, Zr, Hf, Te, Bi, and Se in the range of a total amount of 0.3% or less. Preferably, the content of each of these elements is limited to 0.03% or less.

Next, the steel microstructure of the high-strength hot rolled steel sheet of the invention will be described.

The high-strength hot rolled steel sheet of the invention has a steel microstructure including bainite as a main phase and further including retained $\gamma$ at a volume fraction or less than 3%.

Main phase: bainite

In the present invention, to obtain high strength and good toughness and to obtain good bendability after post-heating, the microstructure includes bainite as a main phase. If ferrite, pearlite, retained $\gamma$, martensite, etc. is a main phase, it is difficult to achieve high strength, good toughness, and good bendability after post-heating simultaneously. Therefore, in the steel microstructure, the main phase is bainite. In the present invention, the main phase is a phase whose area fraction is 50% or more. The area fraction of the main phase is preferably 55% or more and more preferably 65% or more. The area fraction of the main phase is preferably 98% or less and more preferably 95% or less.

Amount of retained austenite (retained $\gamma$): less than 3%

Retained austenite (retained $\gamma$) is a microstructure that causes deterioration in the toughness of the steel sheet and transforms to pearlite after post-heating, causing significant deterioration in strength and toughness. Therefore, it is preferable to reduce the amount of retained austenite as much as possible. In the present invention, the allowable volume fraction of retained γ is less than 3%. Therefore, the volume fraction of the retained γ is less than 3%. The volume fraction of the retained γ is preferably less than 2% and more preferably less than 1%. No particular limitation is imposed on the lower limit of the volume fraction of the retained γ, and the volume fraction of the retained γ may be 0%.

Phases other than bainite and retained γ (the other phases) include one or two or more of ferrite, pearlite, and martensite. The total area fraction of the other phases is preferably 50% or less and more preferably 40% or less. No particular limitation is imposed on the lower limit of the area fraction of the other phases, and the total area fraction of the other phases is preferably 1% or more, more preferably 3% or more, and still more preferably 10% or more.

Amount of solute Nb / total amount of Nb: 0.300 or more and less than 0.800

If the ratio of the amount of solute Nb to the amount of Nb contained, which is given by (the amount of solute Nb / the total amount of Nb), is less than 0.300, the amount of solute Nb that forms precipitates during post-heating is insufficient to compensate for the reduction in strength, and the strength after post-heating is not high. If the ratio is 0.800% or more, the increase in strength due to precipitation after post-heating is significant, and the toughness after post-heating is not good. Therefore, the amount of solute Nb / the total amount of Nb is 0.300 or more and less than 0.800. The ratio is preferably 0.350 or more. The ratio is preferably 0.700 or less. The amount of solute Nb / the total amount of Nb can be determined by a method described in Examples.

Amount of Nb present as precipitates having diameter of 100 nm or more: 0.010 to 0.030% by mass

When Nb-containing precipitates having a diameter of 100 nm or more are contained in a certain amount or more, the growth of these precipitates competes with new precipitation of NbC during post-heating. In this case, the precipitation of fine NbC is appropriately suppressed, and an excessive increase in strength and an excessive reduction in toughness can be prevented. To obtain these effects, the amount of Nb present as precipitates having a diameter of 100 nm or more must be 0.010% by mass or more. If the amount of Nb exceeds 0.030% by mass, the reduction in toughness due to coarse precipitates is significant. Therefore, the amount of Nb present as precipitates having a diameter of 100 nm or more must be 0.030% by mass or less. Thus, the amount of Nb present as precipitates having a diameter of 100 nm or more is 0.010 to 0.030% by mass. The amount is preferably 0.013% by mass or more. The amount is preferably 0.027% by mass or less. The amount of Nb present as precipitates having a diameter of 100 nm or more can be determined by a method described in Examples.

<Method for producing high-strength hot rolled steel sheet>

The high-strength hot rolled steel sheet of the invention is produced as follows. A slab having the chemical composition described above is heated in a temperature range of 1150 to 1300°C, held in this temperature range for 0.2 to 3.5 hours, and hot-rolled including rough rolling in a temperature range of 1080°C or higher at a total rolling reduction of 80 to 90%, cooling of the resulting steel sheet to finish rolling start temperature at an average cooling rate of 1 to 20°C/s, and finish rolling. The finish rolling is performed under the condition that the rolling reduction per pass at lower than or equal to T (°C) determined from a formula below is 25% or less. Then the resulting steel sheet is allowed to naturally cool for 2.0 s or longer, cooled in a temperature range down to 550°C at an average cooling rate of 50°C/s or more, and then coiled at a coiling temperature higher than or equal to Ms temperature (°C) and 550°C or lower.

$$T\ (°C)\ =\ 800\ +\ 2500[Nb]\ +\ 1000[Ti]$$

Here, [Nb] and [Ti] are the content (% by mass) of Nb and the content (% by mass) of Ti, respectively, and are each 0 when the corresponding element is not contained.

The total rolling reduction in the temperature range of 1080°C or higher is determined from the ratio of the thickness at 1080°C with respect to the thickness of the slab before the hot rolling. The rolling reduction per pass at T (°C) or lower is determined from the ratio of the thickness after a rolling pass to the thickness before the rolling pass at T (°C) or lower.

A detailed description will be given below. The temperature described above is the temperature of the surface of the steel sheet at the widthwise center, and the average cooling rate and the cooling rate described above are the average cooling rate and the cooling rate, respectively, at the surface of the steel sheet at the widthwise center. The average cooling rate is [(cooling start temperature - cooling stop temperature) / cooling time from cooling start temperature to cooling stop temperature], unless otherwise specified.

Heating temperature of slab: 1150 to 1300°C

If the heating temperature of the slab is lower than 1150°C, the Nb-containing precipitates do not dissolve sufficiently. In this case, the value of the amount of solute Nb / the total amount of Nb does not fall within the range of 0.300 or more and less than 0.800, and the amount of Nb present as precipitates having a diameter of 100 nm or more does not fall within the range of 0.010 to 0.030% by mass. If the heating temperature of the slab exceeds 1300°C, the Nb-containing precipitates dissolve excessively. In this case, the value of the amount of solute Nb / the total amount of Nb does not fall within the range of 0.300 or more and less than 0.800, and the amount of Nb present as precipitates having a diameter of 100 nm or more does not fall within the range of 0.010 to 0.030% by mass. Therefore, the heating temperature of the slab is 1150 to 1300°C. The heating temperature is preferably 1170°C or higher and more preferably 1185°C or higher. The heating temperature is preferably 1280°C or lower and more preferably 1265°C or lower.

Holding time in temperature range of 1150 to 1300°C: 0.2 to 3.5 hours

If the holing time in the temperature range of 1150 to 1300°C is shorter than 0.2 hours, the Nb-containing precipitates do not dissolve sufficiently. In this case, the value of the amount of solute Nb / the total amount of Nb does not fall within the range of 0.300 or more and less than 0.800, and the amount of Nb present as precipitates having a diameter of 100 nm or more does not fall within the range of 0.010 to 0.030% by mass. If the holding time in the temperature range exceeds 3.5 hours, decarburization near the surface layer is significant, and ferrite and retained $\gamma$ are likely to be formed near the surface layer, so that the microstructure in the invention is not obtained. Therefore, the holding time of the slab in the temperature range is 0.2 to 3.5 hours. The holding time is preferably 0.4 hours. The holding time is preferably 2.5 hours or shorter.

Total rolling reduction in temperature range of 1080°C or higher: 80 to 90%

After the steel sheet is held, hot rolling is performed. The hot rolling includes rough rolling in a temperature range of 1080°C or higher at a total rolling reduction of 80 to 90% and subsequent finish rolling. By performing the rolling in a temperature range of 1080°C or higher at a total rolling reduction of 80 to 90%, the nucleation and growth of coarse Nb-containing precipitates larger than or equal to 100 nm can be facilitated, and the amount of Nb present as precipitates having a diameter of 100 nm or more can be adjusted to 0.010 to 0.030% by mass. If the total rolling reduction is less than 80%, the formation of the precipitates having a diameter of 100 nm or more is insufficient, and the amount of Nb present as precipitates having a diameter of 100 nm or more is less than 0.010% by mass. If the total rolling reduction exceeds 90%, the precipitates having a diameter of 100 nm or more are formed excessively, and the amount of Nb present as the precipitates having a diameter of 100 nm or more is more than 0.030% by mass. Therefore, the total rolling reduction in the temperature range of 1080°C or higher is 80 to 90%. The total rolling reduction is preferably 81% or more. The total rolling reduction is preferably 88% or less.

Average cooling rate in period from end of rough rolling to finish rolling start temperature: 1 to 20°C/s

If the average cooling rate in the period from the temperature at the end of the rough rolling (the rolling end temperature in the final pass of the rough rolling performed in the temperature range of 1080°C or higher) to the finish rolling start temperature (the rolling start temperature in the first pass in the finish rolling) is less than 1°C/s, coarse Nb-containing precipitates dissolve, and the amount of Nb present as precipitates having a diameter of 100 nm or more is less than 0.010% by mass. If the average cooling rate exceeds 20°C/s, thermal strain causes, for example, deterioration in the shape of the sheet, and the operation is adversely affected. Therefore, the cooling in the period from the end of the rough rolling to the finish rolling start temperature is performed at an average cooling rate of 1 to 20°C/s. The average cooling rate is preferably 1 to 15°C/s, more preferably 1 to 10°C/s, and still more preferably 1 to 5°C/s.

Rolling reduction per pass at T (°C) or lower: 25% or less

After the rough rolling, the resulting steel sheet is cooled to the finish rolling start temperature at the cooling rate described above, and then the finish rolling is performed. When the finish rolling is performed at lower than or equal to T (°C) determined by a formula below at a rolling reduction of more than 25% per pass, Nb-containing precipitates are formed, and the value of the amount of solute Nb / the total amount of Nb does not fall within the range of 0.300 or more and less than 0.800. Therefore, the rolling reduction per pass at T (°C) or lower is 25% or less. The rolling reduction is preferably 20% or less and more preferably 18% or less. No particular limitation is imposed on the lower limit of the rolling reduction. However, if the rolling reduction is 5% or less, coarse grains may be formed. Therefore, the rolling reduction is preferably more than 5%. In the present invention, the rolling at T (°C) or lower may not be performed (no rolling pass at T (°C) or lower). No particular limitation is imposed on the rolling reduction per pass at higher than T (°C) in the finish rolling.

T (°C) is determined from the following formula.

$$T(^{\circ}C) = 800 + 2500[Nb] + 1000[Ti]$$

Here, [Nb] and [Ti] are the content (% by mass) of Nb and the content (% by mass) of Ti, respectively, and are each 0 when the corresponding element is not contained.

Natural cooling for 2.0 s or longer

After the finish rolling, the steel sheet is allowed to naturally cool. In this manner, strain is partially released, and the formation of Nb-containing precipitates during subsequent cooling can be suppressed. To obtain this effect, the natural cooling time after the finish rolling must be 2.0 s or longer. The natural cooling time is preferably 2.2 s or longer. No particular limitation is imposed on the upper limit of the natural cooling time. However, when the natal cooling time is 5.0 s or shorter, the subsequent hot rolling can be easily controlled. Therefore, the natural cooling time is preferably 5.0 s or shorter. The natural cooling means that the steel sheet is exposed to the atmosphere (air cooling) without active cooling (accelerated cooling) such as injection of water.

Cooling in temperature range down to 550°C at average cooling rate of 50°C/s or more

After the natural cooling, the steel sheet is cooled in a temperature range down to 550°C at an average cooling rate of 50°C/s or more. If the average cooling rate to 550°C is less than 50°C/s, excessively large amounts of ferrite and Nb-containing precipitates are formed, and the phase structure and the precipitates in the invention are not obtained. Therefore, the average cooling rate in the temperature range from the cooling start temperature down to 550°C after the natural cooling is 50°C/s or more. The average cooling rate is preferably 70°C/s or more. No particular limitation is imposed on the upper limit of the average cooling rate. However, if the average cooling rate is 500°C/s or more, the shape of the steel sheet may deteriorate. Therefore, the average cooling rate is preferably less than 500°C/s and more preferably 300°C/s or less.

Coiling temperature: Ms temperature (°C) or higher and 550°C or lower

If the coiling temperature exceeds 550°C, excessively large amounts of ferrite and Nb-containing precipitates are formed, and the phase structure in the invention and the precipitates in the invention are not obtained. If the coiling temperature is lower than the Ms temperature, an excessively large amount of martensite is formed, and the microstructure in the invention is not obtained. Therefore, the coiling temperature is the Ms temperature (°C) or higher and 550°C or lower. The coiling temperature is preferably higher than or equal to (Ms temperature + 20) °C. The coiling temperature is preferably 530°C or lower. The Ms temperature (°C) is the martensite start temperature and is determined, for example, by a Thermec Mastor-Z. When the Thermec Mastor-Z is used to determine the Ms temperature (°C), for example, a sample is heated to 1250°C, held at this temperature for 300 s, and cooled at a cooling rate of 100°C/s. Then the temperature at which the size of the sample undergoing contraction begins to increase can be determined as the Ms temperature (°C).

No particular limitation is imposed on the production method except for the conditions described above. However, it is preferable to produce the steel sheet by appropriately controlling conditions as described below. For example, it is preferable to perform the finish rolling in at least four passes, from the viewpoint of reducing the number of coarse grains that cause a reduction in workability etc.

The high-strength hot rolled steel sheet of the invention exhibits high strength, good toughness, and good bendability after post-heating. The heating temperature of the post-heating may be 400°C or higher. No particular limitation is imposed on the upper limit of the heating temperature of the post-heating. The heating temperature of the post-heating is, for example, 1150°C or lower. No particular limitation is imposed on the heating time of the post-heating (the holding time at the heating temperature). The heating time is, for example, longer than 0 s. The heating time is, for example, 3600 s or shorter.

EXAMPLES

Steel material having chemical compositions shown in Table 1 was produced using converters and formed into slabs. Then the slabs were heated and hot-rolled under conditions shown in Table 2 to produce hot rolled steel sheets (base sheets). The hot rolled steel sheets obtained were used to perform microstructure observation, to analyze solute Nb and Nb-containing precipitates, and to evaluate tensile properties, hardness, toughness, and bendability according to test methods described below. In addition, the hot rolled steel sheets were subjected to post-heating as shown in Table 2, and the hot rolled steel sheets subjected to the post-heating were used to evaluate hardness, toughness, and bendability according to test methods described below. The temperature of the post-heating was 400°C or higher at which the improvement in the stretch flangeability was found, and the post-heating time was 3600 s or shorter from the viewpoint of productivity. "-" in Table 2 means that the corresponding treatment was not performed. The Ms temperature (°C) in Table 2 was determined by a test using a Thermec Mastor-Z.

Microstructure observation

The area fraction of bainite is the ratio of the area of bainite in the observation area. The area fraction of martensite was determined as follows. A sample was cut from one of the obtained hot rolled steel sheets, and its thicknesswise cross section parallel to the rolling direction was polished and etched with 3% nital. Then, at a position 1/4 of the thickness, photographs were taken in three viewing areas using an SEM (scanning electron microscope) at a magnification of 1500X. The image data of the obtained secondary electron images was used to determine the area fractions of the microstructures using Image-Pro available from Media Cybernetics, and the average area fractions in the three viewing areas were used as the area fractions of the microstructures. To identify the microstructures, a general classification method may be used, and the following method, for example, may be used for identification. In the image data, black or dark gray regions containing carbides or martensite grains having linear boundaries are identified as bainite, and black, dark gray, gray, or light gray regions containing uniformly oriented carbides are identified as lower bainite. Martensite is observed as a black to light gray microstructure containing a plurality of regularly arranged carbides with different orientations or a white or light gray microstructure containing no carbides. Retained $\gamma$ is observed as white or light gray regions containing no carbide. Part of martensite and retained $\gamma$ cannot be distinguished from each other in some cases. Therefore, the area fraction of retained $\gamma$ was determined by a method described later, and the area fraction of retained $\gamma$ was subtracted from the total area fraction of martensite and retained $\gamma$ determined from the SEM images to thereby determine the area fraction of martensite. In the present invention, fresh martensite, auto-tempered martensite, tempered martensite, etc. is formed depending on the degree of tempering, but the martensite may be any of them. The bainite may be any of upper bainite, lower bainite, tempered bainite, etc. but is more preferably upper bainite or tempered bainite. As the degree of tempering increases, the black contrast of the matrix in the microstructure image increases, and therefore the color of the matrix is merely a guide. In the present invention, the identification was made in a comprehensive manner based on the amount of carbides, the form of the microstructures, etc., and each of the microstructures including microstructures described later was classified into a microstructure having characteristics similar thereto. Carbides appear as white dots or lines. Microstructures other than those described above include the following microstructures. Ferrite is a black or dark gray microstructure containing no carbides and no substructures such as laths. Pearlite can be identified as a black and white lamellar or partially discontinuous lamellar microstructure. The amount of retained $\gamma$ is determined as follows. A hot rolled steel sheet is ground to a position 1/4 of the thickness + 0.1 mm and then further polished by 0.1 mm by chemical polishing, and the resulting surface is used as a measurement surface. On the measurement surface, the MoK$\alpha$1 line from an X-ray diffractometer is used to measure the integrated reflection intensities from {200}, {220}, and {311} planes of fcc iron ($\gamma$) and {200}, {211}, and {220} planes of bcc iron (ferrite). The volume fraction of the retained $\gamma$ is determined from the intensity ratios of the integrated reflection intensities from the above planes of fcc iron to the integrated reflection intensities from the above planes of bcc iron and is used as the amount of the retained $\gamma$.

The microstructure forming the main phase with an area fraction of 50% or more was determined using the obtained area fractions of the microstructures, and the main phase and the other microstructures are shown in Table 3. In Table 3, B represents bainite, and $\gamma$ represents retained austenite. O represents the other phases. The other phases include one or two or more of ferrite, pearlite, and martensite.

Analysis of solute Nb and Nb-containing precipitates

A test specimen having a width of 30 mm and a length of 30 mm was cut from one of the obtained hot rolled steel sheets and subjected to constant-current electrolysis in a non-aqueous solvent-based electrolyte (10% AA-based electrolyte: 10 vol% acetylacetone-1 mass% tetramethylammonium chloride-methanol). The current density was set to 20 mA/cm$^2$, and the amount of electrolysis was about 0.2 g. The electrolyte after electrolysis was used as an analysis solution, and the concentrations (% by mass) of Nb and Fe serving as a comparison element in the solution were measured by ICP mass spectrometry. The concentration ratio of Nb with respect to Fe was computed based on the obtained concentrations and multiplied by the content (% by mass) of Fe in the test specimen to thereby obtained the amount (% by mass) of solute Nb. The content (% by mass) of Fe in the test specimen was determined by subtracting the total content (% by mass) of components other than Fe from 100% by mass. The amount (% by mass) of solute Nb was used to compute the ratio of the amount (% by mass) of solute Nb to the amount of (% by mass) Nb contained. After the electrolysis, the test specimen with precipitates adhering to the surface was removed from the electrolyte and immersed in an aqueous sodium hexametaphosphate solution (500 mg/L) (hereinafter referred to as an aqueous SHMP solution). Then ultrasonic vibrations were applied to the test specimen, and the precipitates were thereby separated from the test specimen and extracted into the aqueous SHMP solution. Next, the aqueous SHMP solution containing the precipitates was filtered using a filter with a pore size of 100 nm, and then the precipitates collected on the 100 nm filter were decomposed using an acid. The decomposition solution was analyzed using an IPC emission spectrometer to measure the absolute value of Nb in the decomposition solution. The obtained absolute value of Nb was divided by the electrolyzed mass to obtain the amount of Nb (% by mass with respect to 100% by mass of all the components in the test specimen) contained in precipitates having a diameter of 100 nm or more. Next, the obtained Nb amount (% by mass) was divided by the amount (% by mass) of Nb contained in the test specimen to obtain the amount (% by mass) of Nb present as Nb-containing precipitates with a diameter of 100 nm or more. The electrolyzed mass was determined by measuring the mass of the test specimen from which the precipitates had been removed and subtracting the determined mass from the mass of the test specimen before the electrolysis.

Tensile test

One of the obtained hot rolled steel sheets was cut in a direction orthogonal to the rolling direction to obtain a JIS No. 5 tensile test piece (JIS Z 2241: 2011), and a tensile test was performed at a strain rate of $10^{-3}$/s according to the specifications of JIS Z 2241:2011 to determine the TS. In the present invention, a steel sheet with a TS of 780 MPa or more and less than 1320 MPa was rated pass.

Vickers hardness test

Samples were cut from the obtained hot rolled steel sheets and from the hot rolled steel sheets subjected to post-heating. A thicknesswise cross section of each sample parallel to the rolling direction was polished, and a Vickers hardness test with a load of 5 kg was performed at a position 1/4 of the thickness. The measurement was performed at 5 points, and the average (arithmetic mean) was used as the Vickers hardness of the steel sheet. When the difference in hardness ($\Delta$HV) before and after the post-heating was 40 or less, the strength after the post-heating was judged as good, and the steel sheet was rated pass.

Charpy impact test

Test specimens having a width of 10 mm and a length of 55 mm were cut from one of the obtained hot rolled steel sheets and from the hot rolled steel sheets subjected to post-heating, and Charpy impact test specimens having a V-notch with an included angle of 45° and a length of 2 mm were produced. Then the Charpy impact test was performed five times at -40°C according to JIS Z 2242: 2018 to evaluate the percent ductile fracture. When the average percent ductile fracture of the five measurements was 50% or more, the toughness was judged as good, and the steel sheet was rated pass. The sheet thickness was 2.9 mm, and the direction of the notch was parallel to the rolling direction.

Bending test

A test specimen having a width of 30 mm and a length of 100 mm was cut from a steel sheet obtained by subjecting one of the obtained hot rolled steel sheets to post-heating, and a 90° V-bending test was performed under the conditions of a stroke rate of 50 mm/min and a pressing load of 10 tons. The thickness of the sheet was 2.9 mm, and the direction of the bending ridge was parallel to the rolling direction. The minimum bending radius R (mm) at which a crack with a length of 1 mm or more was not formed was divided by the sheet thickness t (mm) to calculate R/t. When R/t was 0.5 or less when the TS was in the range of 780 MPa or more and less than 900 MPa, 2.0 or less when the TS was in the range of 900 MPa or more and less than 1150 MPa, or 3.5 or less when the TS was in the range of 1150 MPa or more and less than 1320 MPa, the bendability after post-heating was judged as good, and the steel sheet was rated pass.

[Table 1]

| Steel | Chemical composition (% by mass) | | | | | | | | | | Ms temperature (°C) | Remarks |
|---|---|---|---|---|---|---|---|---|---|---|---|---|
| | C | Si | Mn | P | S | Al | N | O | Nb | Others | | |
| A | 0.05 | 0.72 | 1.7 | 0.014 | 0.0008 | 0.040 | 0.002 | 0.003 | 0.097 | Ni: 0.70, Cu: 0.20 | 436 | Suitable steel |
| B | 0.08 | 0.91 | 1.5 | 0.017 | 0.0019 | 0.025 | 0.003 | 0.001 | 0.044 | - | 455 | Suitable steel |

(continued)

| Steel | Chemical composition (% by mass) | | | | | | | | | | Ms temperature (°C) | Remarks |
|---|---|---|---|---|---|---|---|---|---|---|---|---|
| | C | Si | Mn | P | S | Al | N | O | Nb | Others | | |
| C | 0.10 | 0.40 | 2.0 | 0.022 | 0.0011 | 0.030 | 0.003 | 0.001 | 0.036 | V: 0.15, Sn: 0.050 | 430 | Suitable steel |
| D | 0.06 | 1.20 | 2.6 | 0.010 | 0.0025 | 0.033 | 0.004 | 0.001 | 0.021 | Ti: 0.145, B: 0.0020 | 409 | Suitable steel |
| E | 0.13 | 0.40 | 2.1 | 0.005 | 0.0003 | 0.035 | 0.004 | 0.002 | 0.075 | Cr: 0.40, B: 0.0020 | 399 | Suitable steel |
| F | 0.15 | 0.63 | 1.3 | 0.017 | 0.0015 | 0.210 | 0.005 | 0.001 | 0.032 | Cr: 0.10 | 443 | Suitable steel |
| G | <u>0.03</u> | 1.10 | 1.2 | 0.023 | 0.0011 | 0.061 | 0.003 | 0.002 | 0.056 | V: 0.10, Ca: 0.0015 | 483 | Comparative steel |
| H | <u>0.19</u> | 0.76 | 2.2 | 0.012 | 0.0003 | 0.040 | 0.002 | 0.001 | 0.041 | Ni: 0.30 | 389 | Comparative steel |
| I | 0.10 | <u>0.04</u> | 1.9 | 0.015 | 0.0008 | 0.038 | 0.004 | 0.001 | 0.038 | Cu: 0.10 | 433 | Comparative steel |
| J | 0.08 | 0.51 | <u>0.4</u> | 0.012 | 0.0011 | 0.025 | 0.006 | 0.001 | 0.050 | - | 496 | Comparative steel |
| K | 0.10 | 0.50 | <u>3.9</u> | 0.006 | 0.0010 | 0.022 | 0.003 | 0.002 | 0.032 | Cr: 0.20, Mo: 0.20 | 356 | Comparative steel |
| L | 0.09 | 0.33 | 2.5 | 0.015 | 0.0018 | 0.034 | 0.003 | <u>0.004</u> | 0.027 | - | 416 | Comparative steel |
| M | 0.10 | 0.64 | 2.3 | 0.009 | 0.0022 | 0.038 | 0.003 | 0.002 | <u>0.016</u> | Mo: 0.15, REM: 0.0010 | 422 | Comparative steel |
| N | 0.07 | 0.25 | 1.4 | 0.015 | 0.0012 | 0.016 | 0.004 | 0.001 | <u>0.113</u> | Sb: 0.010, Ti: 0.011 | 448 | Comparative steel |

\* Underlines mean outside the range of the invention.
\* The balance other than the above components is Fe and incidental impurities.

[Table 2]

| Steel sheet No. | Steel | Heating of slab Slab heating temperature (°C) | Heating of slab Slab heating time (hr) | Hot rolling Total rolling reduction at 1080°C or higher (%) | Hot rolling Average cooling rate*1 in period from end of rough rolling to finish rolling start temperature (°C/s) | Hot rolling Maximum rolling reduction per pass at T°C or lower (%) | Hot rolling Natural cooling time after finish rolling (s) | Hot rolling Average cooling rate down to 550°C (°C/s) | Hot rolling Coiling temperature (°C) | Ms temperature (°C) | T*2 (°C) | Post-heating Post-heating temperature (°C) | Post-heating Post-heating holding time (s) | Remarks |
|---|---|---|---|---|---|---|---|---|---|---|---|---|---|---|
| 1 | A | 1250 | 1.2 | 90 | 3 | 17 | 2.2 | 70 | 500 | 436 | 1043 | 550 | 3600 | Inventive Example |
| 2 | A | 1250 | 1.2 | 92 | 3 | 17 | 2.2 | 70 | 500 | 436 | 1043 | 550 | 3600 | Comparative Example |
| 3 | A | 1120 | 1.2 | 90 | 3 | 17 | 2.2 | 70 | 500 | 436 | 1043 | 550 | 3600 | Comparative Example |
| 4 | B | 1180 | 2.0 | 82 | 1 | 15 | 2.5 | 80 | 480 | 455 | 910 | 650 | 1 | Inventive Example |
| 5 | B | 1180 | 0.1 | 82 | 1 | 15 | 2.5 | 80 | 480 | 455 | 910 | 650 | 1 | Comparative Example |
| 6 | B | 1180 | 2.0 | 77 | 1 | 15 | 2.5 | 80 | 480 | 455 | 910 | 650 | 1 | Comparative Example |
| 7 | C | 1200 | 0.4 | 82 | 1 | 12 | 2.7 | 100 | 460 | 430 | 890 | 700 | 1 | Inventive Example |
| 8 | C | 1200 | 0.4 | 82 | 1 | 12 | 1.6 | 100 | 460 | 430 | 890 | 700 | 1 | Comparative Example |
| 9 | C | 1200 | 0.4 | 82 | 1 | 12 | 2.7 | 30 | 460 | 430 | 890 | 700 | 1 | Comparative Example |
| 10 | D | 1280 | 1.5 | 80 | 1 | 12 | 3.2 | 120 | 480 | 409 | 998 | 450 | 600 | Inventive Example |
| 11 | D | 1280 | 1.5 | 80 | 0.3 | 12 | 3.2 | 120 | 480 | 409 | 998 | 450 | 600 | Comparative Example |
| 12 | D | 1280 | 1.5 | 80 | 1 | 12 | 3.2 | 120 | 600 | 409 | 998 | 450 | 600 | Comparative Example |

(continued)

| Steel sheet No. | Steel | Heating of slab | | Hot rolling | | | | | | | | | Post-heating | | Remarks |
| | | Slab heating temperature (°C) | Slab heating time (hr) | Total rolling reduction at 1080°C or higher (%) | Average cooling rate*1 in period from end of rough rolling to finish rolling start temperature (°C/s) | Maximum rolling reduction per pass at T°C or lower (%) | Natural cooling time after finish rolling (s) | Average cooling rate down to 550°C (°C/s) | Coiling temperature (°C) | Ms temperature (°C) | T*2 (°C) | Post-heating temperature (°C) | Post-heating holding time (s) | |
|---|---|---|---|---|---|---|---|---|---|---|---|---|---|---|
| 13 | | 1260 | 0.5 | 84 | 2 | 22 | 2.0 | 50 | 420 | 399 | 988 | 600 | 1000 | Inventive Example |
| 14 | E | 1260 | 1.0 | 84 | 2 | 31 | 2.0 | 50 | 420 | 399 | 988 | 600 | 1000 | Comparative Example |
| 15 | | 1260 | 0.5 | 84 | 2 | 22 | 2.0 | 50 | 350 | 399 | 988 | 600 | 1000 | Comparative Example |
| 16 | | 1200 | 1.0 | 82 | 5 | - | 2.2 | 70 | 460 | 443 | 880 | 450 | 3600 | Inventive Example |
| 17 | F | 1200 | 3.6 | 82 | 5 | - | 2.2 | 70 | 460 | 443 | 880 | 450 | 3600 | Comparative Example |
| 18 | | 1330 | 1.0 | 82 | 5 | - | 2.2 | 70 | 460 | 443 | 880 | 450 | 3600 | Comparative Example |
| 19 | G | 1220 | 1.2 | 86 | 2 | 15 | 2.8 | 60 | 520 | 482 | 940 | 510 | 3600 | Comparative Example |
| 20 | H | 1250 | 1.0 | 86 | 2 | 15 | 2.2 | 70 | 400 | 389 | 903 | 600 | 60 | Comparative Example |
| 21 | I | 1250 | 1.0 | 86 | 2 | 15 | 2.2 | 70 | 470 | 433 | 895 | 400 | 60 | Comparative Example |
| 22 | J | 1250 | 1.0 | 86 | 2 | 15 | 2.2 | 70 | 520 | 496 | 925 | 550 | 600 | Comparative Example |
| 23 | K | 1250 | 1.0 | 86 | 2 | 15 | 2.2 | 70 | 400 | 356 | 880 | 500 | 1200 | Comparative Example |
| 24 | L | 1250 | 1.0 | 86 | 2 | - | 2.2 | 70 | 430 | 416 | 868 | 500 | 1200 | Comparative Example |
| 25 | M | 1200 | 1.2 | 86 | 2 | 15 | 2.8 | 70 | 480 | 422 | 840 | 700 | 1 | Comparative Example |

EP 4 600 396 A1

| Steel sheet No. | Steel | Heating of slab | | Hot rolling | | | | | | | | | Post-heating | | Remarks |
|---|---|---|---|---|---|---|---|---|---|---|---|---|---|---|---|
| | | Slab heating temperature (°C) | Slab heating time (hr) | Total rolling reduction at 1080°C or higher (%) | Average cooling rate[*1] in period from end of rough rolling to finish rolling start temperature (°C/s) | Maximum rolling reduction per pass at T°C or lower (%) | Natural cooling time after finish rolling (s) | Average cooling rate down to 550°C (°C/s) | Coiling temperature (°C) | Ms temperature (°C) | T[*2] (°C) | | Post-heating temperature (°C) | Post-heating holding time (s) | |
| 26 | <u>N</u> | 1280 | 1.0 | 86 | 2 | 15 | 2.2 | 70 | 480 | 448 | 1094 | | 600 | 1000 | Comparative Example |

\* Underlines mean outside the range of the invention.

\*1 The average cooling rate in a period from the end of the rough rolling in the temperature range of 1080°C or higher at a total rolling reduction of 80 to 90% to the finish rolling start temperature.

\*2 T(°C) = 800 + 2500[Nb] + 1000[Ti]. In the formula, [Nb] is the content (% by mass) of Nb, and [Ti] is the content (% by mass) of Ti.

[Table 3]

| Steel sheet No. | Steel microstructure | | | | | Properties | | Properties after post-heating | | | Remarks |
|---|---|---|---|---|---|---|---|---|---|---|---|
| | V(B) (%) | V(y) (%) | V(O) (%) | Amount of solute Nb / total amount of Nb | Amount of Nb present as precipitates equal to or larger than 100 nm (% by mass) | TS (MPa) | Percent ductile fracture (%) | ΔHV | Percent ductile fracture after post-heating (%) | R/t after post-heating | |
| 1 | 92 | 1 | 7 | 0.693 | 0.026 | 1000 | 100 | 5 | 75 | 1.0 | Inventive Example |
| 2 | 90 | 1 | 9 | 0.523 | 0.037 | 1003 | 40 | 3 | 30 | 1.2 | Comparative Example |
| 3 | 86 | 1 | 13 | 0.295 | 0.044 | 963 | 40 | 22 | 30 | 1.4 | Comparative Example |
| 4 | 98 | 0 | 2 | 0.568 | 0.012 | 792 | 85 | 5 | 95 | 0 | Inventive Example |
| 5 | 98 | 0 | 2 | 0.227 | 0.032 | 789 | 45 | 7 | 40 | 0.2 | Comparative Example |
| 6 | 98 | 0 | 2 | 0.636 | 0.008 | 797 | 90 | 18 | 40 | 0 | Comparative Example |
| 7 | 98 | 1 | 1 | 0.583 | 0.014 | 1015 | 90 | 8 | 80 | 1.4 | Inventive Example |
| 8 | 97 | 1 | 2 | 0.250 | 0.013 | 1026 | 85 | 44 | 75 | 1.2 | Comparative Example |
| 9 | 45 | 1 | 54 | 0.139 | 0.013 | 897 | 30 | 48 | 20 | 0.7 | Comparative Example |
| 10 | 53 | 0 | 47 | 0.476 | 0.011 | 1213 | 70 | 24 | 55 | 3.1 | Inventive Example |
| 11 | 52 | 0 | 48 | 0.571 | 0.008 | 1221 | 60 | 19 | 30 | 2.9 | Comparative Example |
| 12 | 39 | 0 | 61 | 0.095 | 0.012 | 1178 | 0 | 4 | 0 | 2.1 | Comparative Example |
| 13 | 87 | 2 | 11 | 0.680 | 0.016 | 1158 | 95 | 15 | 90 | 1.7 | Inventive Example |
| 14 | 89 | 1 | 10 | 0.293 | 0.019 | 1165 | 85 | 41 | 80 | 1.9 | Comparative Example |
| 15 | 42 | 1 | 57 | 0.627 | 0.017 | 1189 | 70 | 4 | 70 | 3.8 | Comparative Example |
| 16 | 70 | 0 | 30 | 0.375 | 0.018 | 844 | 90 | 9 | 90 | 0.3 | Inventive Example |
| 17 | 47 | 0 | 53 | 0.344 | 0.014 | 797 | 40 | 7 | 30 | 0.2 | Comparative Example |
| 18 | 82 | 0 | 18 | 0.813 | 0.005 | 865 | 100 | 12 | 40 | 0.4 | Comparative Example |
| 19 | 77 | 0 | 23 | 0.446 | 0.022 | 719 | 100 | 18 | 100 | 0 | Comparative Example |

(continued)

| [Table 3] | | | | | | | | | | | |
|---|---|---|---|---|---|---|---|---|---|---|---|
| | Steel microstructure | | | | | Properties | | Properties after post-heating | | | |
| Steel sheet No. | V(B) (%) | V(y) (%) | V(O) (%) | Amount of solute Nb / total amount of Nb | Amount of Nb present as precipitates equal to or larger than 100 nm (% by mass) | TS (MPa) | Percent ductile fracture (%) | ΔHV | Percent ductile fracture after post-heating (%) | R/t after post-heating | Remarks |
| 20 | 72 | 2 | 26 | 0.390 | 0.024 | 1315 | 0 | 37 | 10 | 2.8 | Comparative Example |
| 21 | 94 | 0 | 6 | 0.474 | 0.018 | 861 | 90 | 3 | 90 | 1.4 | Comparative Example |
| 22 | <u>25</u> | 0 | 75 | <u>0.200</u> | 0.020 | <u>655</u> | 100 | 9 | 100 | 0 | Comparative Example |
| 23 | <u>5</u> | 2 | 93 | 0.469 | 0.015 | 1256 | 0 | 35 | 0 | 3.4 | Comparative Example |
| 24 | 83 | 0 | 17 | 0.481 | 0.013 | 938 | 40 | 7 | 20 | 2.2 | Comparative Example |
| 25 | 97 | 1 | 2 | <u>0.188</u> | 0.010 | 968 | 100 | 43 | 100 | 0 | Comparative Example |
| 26 | 75 | 0 | 25 | 0.611 | <u>0.036</u> | 890 | 40 | 39 | 20 | 0 | Comparative Example |
| * Underlines mean outside the range of the invention. <br> * B: bainite, y: retained austenite, O: other phases | | | | | | | | | | | |

In the high-strength hot rolled steel sheets in all Inventive Examples, the TS was 780 MPa or more and less than 1320 MPa. The toughness was good, and the strength, toughness, and bendability after post-heating were also good. However, in Comparative Examples outside the ranges of the invention, at least one of the desired strength and the desired toughness was not obtained, or at least one of the desired strength, the desired toughness, and the desired bendability after post-heating was not obtained.

Industrial Applicability

According to the present invention, a high-strength hot rolled steel sheet having a TS of 780 MPa or more and less than 1320 MPa, having good toughness, and exhibiting high strength, good toughness, and good bendability after post-heating can be obtained. When the high-strength steel sheet of the invention is used for automotive part applications, the steel sheet can significantly contribute to improvement in crash safety of the automobiles and improvement in their fuel economy.

**Claims**

1. A high-strength hot rolled steel sheet having a chemical composition containing, in % by mass,

C: 0.04 to 0.18%,
Si: 0.1 to 3.0%,
Mn: 0.5 to 3.5%,
P: more than 0% and 0.050% or less,
S: more than 0% and 0.010% or less,

Al: more than 0% and 1.5% or less,

N: more than 0% and 0.010% or less,

O: more than 0% and 0.003% or less, and

Nb: 0.020 to 0.100%,

with the balance being Fe and incidental impurities,

wherein the high-strength hot rolled steel sheet has a steel microstructure in which bainite is a main phase and in which a volume fraction of retained austenite is less than 3%,

wherein a ratio of an amount of solute Nb to an amount of Nb contained, which is given by (the amount of solute Nb / a total amount of Nb), is 0.300 or more and less than 0.800, and

wherein an amount of Nb present as precipitates having a diameter of 100 nm or more is 0.010 to 0.030% by mass.

2. The high-strength hot rolled steel sheet according to claim 1, wherein the chemical composition further contains, in % by mass, at least one or two elements selected from

Cr: 0.005 to 2.0%,

Cu: 0.005 to 0.5%,

Ni: 0.005 to 2.0%,

Mo: 0.005 to 1.0%,

V: 0.005 to 0.5%,

Ti: 0.005 to 0.15%,

B: 0.0002 to 0.0050%,

Ca: 0.0001 to 0.0050%,

REM: 0.0001 to 0.0050%,

Sb: 0.0010 to 0.10%, and

Sn: 0.0010 to 0.50%.

3. A method for producing the high-strength hot rolled steel sheet according to claim 1 or 2, the method comprising:

heating a slab having the chemical composition in a temperature range of 1150 to 1300°C; holding the slab in the temperature range for 0.2 to 3.5 hours;

then hot-rolling the slab to obtain a steel sheet,

the hot-rolling including rough rolling in a temperature range of 1080°C or higher at a total rolling reduction of 80 to 90%, cooling of the resulting steel sheet to finish rolling start temperature at an average cooling rate of 1 to 20°C/s, and finish rolling, the finish rolling being performed under the condition that a rolling reduction per pass at lower than or equal to T (°C) determined from a formula below is 25% or less; after completion of the finish rolling, allowing the resulting steel sheet to naturally cool for 2.0 s or longer;

then cooling the resulting steel sheet in a temperature range down to 550°C at an average cooling rate of 50°C/s or more; and then coiling the resulting steel sheet at a coiling temperature higher than or equal to Ms temperature (°C) and 550°C or lower:

$$T\ (°C) = 800 + 2500[Nb] + 1000[Ti],$$

where [Nb] and [Ti] are a content (% by mass) of Nb and a content (% by mass) of Ti, respectively, and are each 0 when a corresponding element is not contained.

## INTERNATIONAL SEARCH REPORT

| International application No. |
| --- |
| **PCT/JP2023/041537** |

**A.    CLASSIFICATION OF SUBJECT MATTER**

*C22C 38/00*(2006.01)i; *B21B 1/26*(2006.01)i; *C21D 8/02*(2006.01)i; *C21D 9/46*(2006.01)i; *C22C 38/12*(2006.01)i; *C22C 38/60*(2006.01)i

FI:   C22C38/00 301W; C22C38/00 301A; C22C38/12; C22C38/60; C21D9/46 T; C21D8/02 B; B21B1/26 Z

According to International Patent Classification (IPC) or to both national classification and IPC

**B.    FIELDS SEARCHED**

Minimum documentation searched (classification system followed by classification symbols)

C22C38/00; B21B1/26; C21D8/02; C21D9/46; C22C38/12; C22C38/60

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C.    DOCUMENTS CONSIDERED TO BE RELEVANT**

| Category* | Citation of document, with indication, where appropriate, of the relevant passages | Relevant to claim No. |
| --- | --- | --- |
| A | WO 2022/042728 A1 (BAOSHAN IRON & STEEL CO., LTD.) 03 March 2022 (2022-03-03) | 1-3 |
| A | WO 2022/042731 A1 (BAOSHAN IRON & STEEL CO., LTD.) 03 March 2022 (2022-03-03) | 1-3 |

☐ Further documents are listed in the continuation of Box C.      ☑ See patent family annex.

| | | |
| --- | --- | --- |
| *    Special categories of cited documents: | "T" | later document published after the international filing date or priority date and not in conflict with the application but cited to understand the principle or theory underlying the invention |
| "A"    document defining the general state of the art which is not considered to be of particular relevance | | |
| "D"    document cited by the applicant in the international application | "X" | document of particular relevance; the claimed invention cannot be considered novel or cannot be considered to involve an inventive step when the document is taken alone |
| "E"    earlier application or patent but published on or after the international filing date | | |
| "L"    document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O"    document referring to an oral disclosure, use, exhibition or other means | | |
| "P"    document published prior to the international filing date but later than the priority date claimed | "&" | document member of the same patent family |

| Date of the actual completion of the international search | Date of mailing of the international search report |
| --- | --- |
| **02 February 2024** | **13 February 2024** |

| Name and mailing address of the ISA/JP | Authorized officer |
| --- | --- |
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (July 2022)

# EP 4 600 396 A1

**INTERNATIONAL SEARCH REPORT**
Information on patent family members

International application No.

**PCT/JP2023/041537**

| Patent document cited in search report | | | Publication date (day/month/year) | Patent family member(s) | | | Publication date (day/month/year) |
|---|---|---|---|---|---|---|---|
| WO | 2022/042728 | A1 | 03 March 2022 | EP | 4206349 | A1 | |
| | | | | CN | 114107791 | A | |
| | | | | KR | 10-2023-0059806 | A | |
| | | | | JP | 2023-539648 | A | |
| WO | 2022/042731 | A1 | 03 March 2022 | EP | 4206351 | A1 | |
| | | | | KR | 10-2023-0059810 | A | |
| | | | | CN | 114107798 | A | |
| | | | | JP | 2023-539650 | A | |

Form PCT/ISA/210 (patent family annex) (July 2022)

**EP 4 600 396 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2002113527 A
- JP 2015057514 A
- WO 2019131289 A